# FASCICULE DE BREVET EUROPEEN

(11) **EP 2 421 691 B1**
(45) Date de publication et mention de la délivrance du brevet: **22.01.2014**
(21) Numéro de dépôt: 10717190.2
(22) Date de dépôt: 14.04.2010
(51) Int. Cl.: B29C 49/58, B29C 49/06

(54) **TUYÈRE PERFECTIONNÉE POUR UNE MACHINE DE FABRICATION DE RÉCIPIENTS**
VERBESSERTER BLASDORN ZU HERSTELLUNG VON BEHÄLTERN
IMPROVED NOZZLE FOR A MACHINE FOR MANUFACTURING CONTAINERS

(30) Priorité: 21.04.2009 FR 0901916
(43) Date de publication de la demande: 29.02.2012
(73) Titulaire: Sidel Participations, 76930 Octeville sur Mer (FR)
(72) Inventeur: LAMBERT, Thierry, F-76930 Octeville sur Mer (FR)
(74) Mandataire: Demulsant, Xavier
(86) Numéro de dépôt international: PCT/FR2010/000306
(87) Numéro de publication internationale: WO 2010/122237

(56) Documents cités:
- WO-A2-2009/007315
- FR-A1- 2 804 059
- FR-A1- 2 912 678

## Description

L'invention se rapporte au domaine de la fabrication des récipients, par soufflage ou étirage soufflage.

Le soufflage des récipients a ordinairement lieu dans un moule dont une paroi définit une cavité correspondant à l'empreinte d'un récipient, dans laquelle on introduit une ébauche en matière plastique préalablement chauffée de manière à ramollir la matière (le terme « ébauche » vise non seulement une préforme mais également un récipient intermédiaire ayant subi un ou plusieurs soufflages préalables), cette ébauche étant ensuite mise sous pression pour la plaquer contre la paroi du moule et ainsi former le récipient.

L'introduction d'un gaz (en général de l'air) dans l'ébauche se fait par l'intermédiaire d'une tuyère appliquée de manière étanche contre une face supérieure du moule. Compte tenu de sa forme creuse, la tuyère, qui vient recouvrir le col de l'ébauche dépassant du moule, est généralement appelée « tuyère cloche ».

Une telle tuyère est décrite dans la demande de brevet français N° FR 2 848 905 ou dans la demande de brevet américain équivalente N°US 2006/0115546, toutes deux au nom de la demanderesse.

Il arrive que la préforme soit mal positionnée lorsque la tuyère vient en appui sur le moule. Dans ce cas, la préforme conserve sa mauvaise position lors du soufflage, ce qui conduit à un récipient difforme, que son col de travers, visuellement inesthétique, rend impropre au remplissage et au bouchage.

C'est pourquoi cette tuyère a été perfectionnée par adjonction d'un système de stabilisation de la préforme, comprenant un insert mobile qui vient s'appliquer contre le col de la préforme pour plaquer celle-ci contre le moule et la remettre, le cas échéant, en position verticale avant que le soufflage ne démarre.

Ce système, décrit dans la demande de brevet français n° FR 2 912 678, qui représente le préambule de la revendication 1, au nom de la demanderesse, a **permis** de **réduire** sensiblement le taux de rebut des récipients.

Toutefois, bien que moins nombreux qu'auparavant, des incidents ont malgré tout été rapportés. Ces incidents concernent en particulier (mais non exclusivement) le soufflage des récipients de faible capacité (notamment de 0,5 l), dont les préformes présentent un corps de faible longueur qui accroît le risque de désaxement lors de l'introduction dans le moule. De fait, certaines préformes présentent un tel désaxement que, lors de la descente de la tuyère, le col se trouve écrasé par celle-ci avant même que la préforme n'ait pu être stabilisée.

On connaît par ailleurs de la demande de brevet FR 2 804 059 et de son équivalent américain US 2003/077349, au nom de la demanderesse, une tuyère munie d'un organe de préhension qui, lors de la descente de la tuyère, vient s'emmancher en force dans le col. La problématique exposée dans ce document est cependant tout autre, puisqu'il s'agit d'orienter angulairement l'ébauche autour de son axe, de manière précise. De fait, l'organe de préhension n'est pas conçu pour stabiliser l'ébauche en cas de mauvais positionnement axial, le fonctionnement correct de ce système supposant au contraire un positionnement axial préalable correct de l'ébauche, à défaut de quoi l'organe de préhension peut, en appuyant sur l'ébauche de manière dissymétrique, aggraver son mauvais positionnement.

L'invention vise à accroître encore la fiabilité du soufflage (et donc la qualité moyenne des récipients) en apportant des améliorations aux tuyères connues, et plus précisément en perfectionnant la stabilisation des préformes au départ du soufflage.

À cet effet, l'invention propose, suivant un premier aspect, un dispositif d'injection de gaz sous pression pour une machine de soufflage ou d'étirage soufflage d'un récipient à partir d'une ébauche en matière plastique, ce dispositif comprenant :
- une tuyère mobile en translation entre une position haute dans laquelle elle est écartée d'un moule destiné à recevoir l'ébauche, et une position basse dans laquelle elle vient en appui contre le moule en recouvrant un col de l'ébauche,
- un insert monté mobile en translation par rapport à la tuyère, cet insert présentant une face d'extrémité inférieure apte à venir en appui contre un buvant de l'ébauche ;
- un organe de rappel sollicitant l'insert vers une position basse dans laquelle l'insert se trouve en butée de fin de course par rapport à la tuyère, et dans laquelle la face d'extrémité inférieure de l'insert dépasse de la tuyère.

De la sorte, il est possible de minimiser le jeu entre l'insert et le col de la préforme lors de l'introduction de celle-ci dans le moule. Il en résulte une stabilisation plus immédiate de la préforme, ce qui minimise les risques de mauvais positionnement pendant le soufflage.

Cette face d'appui est de préférence plane, et perpendiculaire à un axe de déplacement de l'insert.

Selon un mode préféré de réalisation, l'épaisseur de l'insert au niveau la face d'extrémité inférieure est supérieure à celle du col de l'ébauche au niveau du buvant.

L'insert comprend par exemple un corps tubulaire à partir duquel s'étend, en saillie radiale, au moins une collerette coopérant à coulissement avec un alésage formé dans la tuyère, cette collerette étant éventuellement percée de trous formant évents.

Selon un mode préféré de réalisation, la tuyère est montée en translation par rapport à un cylindre fixe ; l'organe de rappel (en pratique un ressort de compression) est de préférence interposé entre l'insert et une surface d'appui fixe par rapport au cylindre ; cette surface d'appui appartient par exemple à une bague montée sur une chemise fixe par rapport au cylindre et dont un corps est emmanché dans la tuyère.

L'invention propose, suivant un deuxième aspect, une machine de fabrication de récipients par soufflage ou étirage soufflage à partir d'ébauches en matière plastique, qui comprend :
- au moins une unité de moulage munie d'un moule destiné à recevoir une ébauche, et
- une tuyère telle que décrite ci-dessus, cette tuyère étant montée mobile entre une position haute où elle est écartée d'une face supérieure du moule pour permettre l'introduction de l'ébauche dans le moule, et une position basse dans laquelle elle est appliquée contre la face supérieure du moule.

D'autres objets et avantages de l'invention apparaîtront à la lumière de la description faite ci-après en référence aux dessins annexés dans lesquels :
- la figure 1 est une vue d'élévation en coupe montrant une tuyère, représentée dans une position haute, disposée à l'aplomb d'une préforme introduite dans un moule ;
- la figure 2 est, à échelle agrandie, une vue d'un détail de la figure 1 selon l'encart Il ;
- la figure 3 est une figure similaire à la figure 1, montrant la tuyère en position basse appliquée contre le moule ;
- la figure 4 est, à échelle agrandie, une vue d'un détail de la figure 3 selon l'encart IV.

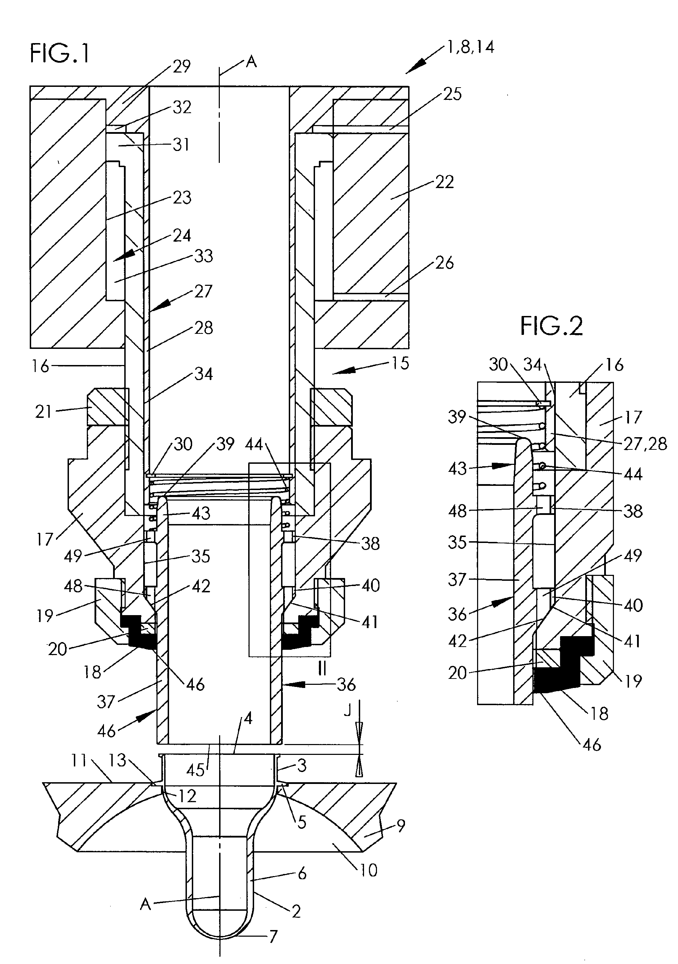

Sur la figure 1 est partiellement représentée une machine **1** de fabrication de récipients par soufflage ou étirage soufflage à partir d'ébauches **2** en matière plastique tel que PET. Bien qu'il puisse tout aussi bien s'agir d'un récipient intermédiaire ayant subi au moins un soufflage préalable, nous supposons dans ce qui suit que l'ébauche **2** considérée est une préforme ayant simplement subi une opération de chauffe à une température supérieure à sa température de transition vitreuse.

La préforme **2** comprend un col **3**, qui reste sensiblement inchangé au cours du soufflage et présente à une extrémité supérieure un buvant **4** de forme circulaire. Le col **3** est prolongé, au-dessous d'une collerette **5** permettant d'assurer la sustentation de la préforme **2** au cours des étapes de fabrication (chauffe, soufflage) du récipient, par un corps **6** sensiblement cylindrique fermé à une extrémité inférieure par une calotte hémisphérique **7**.

La machine **1** comprend une pluralité d'unités **8** de moulage dont une seule est représentée sur les figures. Cette unité **8** comprend un moule **9** creusé d'une cavité **10** définissant l'empreinte du récipient. La cavité **10** présente une symétrie générale de révolution autour d'un axe **A**. Cet axe de symétrie est commun à l'ensemble des éléments qui seront décrits ci-après. A une extrémité supérieure, le moule **9** présente une face supérieure **11** sur laquelle la cavité **10** débouche par une ouverture **12** circulaire au travers de laquelle la préforme **2** est introduite dans le moule **9**.

Comme cela est visible notamment sur la figure 1, l'ouverture est munie d'un lamage **13** dans lequel vient se caler la collerette **5** de la préforme **2** lorsque celle-ci est normalement introduite dans le moule **9**.

La préforme **2** illustrée sur la figure 1 est une préforme destinée à la fabrication d'un récipient de faible capacité, tel que 0,5 l, ce qui explique sa forme compacte, le corps **6** présentant une longueur faible et un diamètre inférieur à celui du col **3**. Bien que l'invention ne soit nullement liée à la forme ou à la taille des préformes, on a volontairement représenté une préforme **2** de ce type, car elle est statistiquement sujette - plus que les préformes des récipients de grande capacité (1,5 l ou 2 l) - au désaxement lors de son introduction dans le moule. Un tel désaxement est généralement dû à choc élastique de la collerette **5** contre le lamage **13** lors de son l'introduction de la préforme **2** dans le moule.

L'unité **8** de moulage est équipée d'un dispositif **14** d'injection de gaz incluant une tuyère-cloche **15**. La tuyère **15** comprend :
- un corps **16** de tuyère tubulaire qui, lorsque la fabrication du récipient inclut une opération d'étirage, est traversée par une tige d'élongation (non représentée) coulissante ;
- un embout **17** fileté, vissé sur le corps **16** de tuyère à une extrémité inférieure de celui-ci ;
- un joint **18** annulaire d'étanchéité (réalisé dans un matériau flexible tel que caoutchouc - naturel ou synthétique - ou silicone) percé d'un trou central et dont la fixation est assurée par une virole **19** vissée sur l'embout **17** avec interposition, entre le joint **18** et l'embout **17**, d'une rondelle **20** à des fins de rigidification ;
- un contre-écrou **21** vissé sur le corps **16** de tuyère au-dessus de l'embout **17** et serré contre celui-ci pour empêcher son dévissage.

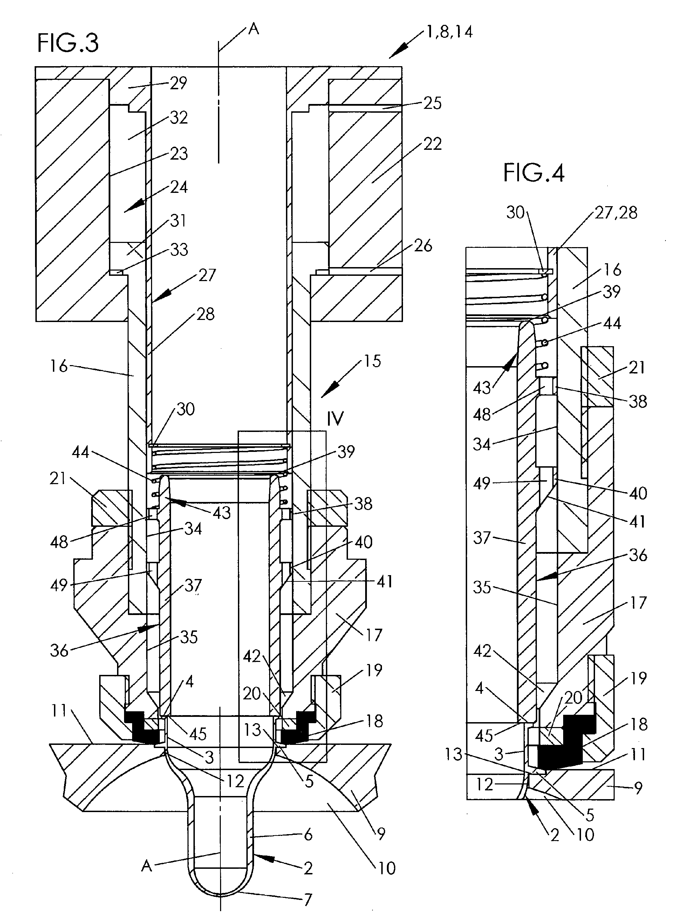

La tuyère **15** est montée déplaçable en translation, dans l'axe **A** du moule **9**, entre une position haute (figure 1) dans laquelle elle est écartée de la face supérieure **11** du moule **9** pour permettre l'introduction de la préforme **2** dans celui-ci, et une position basse (figure 3) dans laquelle elle est appliquée contre la face supérieure **11**, le joint **18** venant en appui, sur son bord interne, contre la collerette **5**.

Le dispositif **14** d'injection comprend un cylindre **22** par rapport auquel la tuyère **15** est montée en translation. Le cylindre **22**, qui assure le support et le guidage de la tuyère **15** lors de son déplacement, comprend un alésage **23** central définissant un volume **24** interne dans lequel débouchent deux canaux superposés percés dans la paroi du cylindre, à savoir un canal **25** supérieur et un canal **26** inférieur pour alimenter le volume **24** en un fluide (tel que de l'eau ou de l'huile, ou encore de l'air) sous pression.

Le dispositif **14** d'injection comprend en outre une chemise **27** tubulaire comprenant un corps **28** emmanché dans le corps **16** de tuyère, prolongé à une extrémité supérieure par une tête **29** annulaire par laquelle la chemise **27** est rigidement fixée au cylindre **22**.

À une extrémité inférieure, le corps **28** de chemise est muni d'une rainure intérieure annulaire dans laquelle est montée une bague d'arrêt ou circlips **30** dont la fonction sera expliquée ci-après.

À une extrémité supérieure, le corps **16** de tuyère est prolongé par une tête **31** conformée en piston annulaire. Le piston **31** est reçu dans l'alésage **23**, dont il sépare le volume **24** interne en deux chambres distinctes, à savoir une chambre **32** supérieure communiquant avec le canal **25** supérieur, et une chambre **33** inférieure communiquant avec le canal **26** inférieur.

La tuyère **15** est déplacée de sa position haute (figure 1) vers sa position basse (figure 3) par injection de fluide sous pression dans la chambre **32** supérieure via le canal **25** supérieur et évacuation simultanée du fluide présent dans la chambre **33** inférieure via le canal **26** inférieur. Inversement, la tuyère **15** est déplacée de sa position basse vers sa position haute par injection de fluide sous pression dans la chambre **33** inférieure via le canal **26** inférieur et évacuation simultanée du fluide présent dans la chambre **32** supérieure via le canal **25** supérieur.

Comme cela est visible sur les figures, le corps **16** de tuyère définit intérieurement un alésage **34** dont le diamètre correspond, au jeu près, au diamètre extérieur du corps **28** de chemise. L'embout **17** présente une portion médiane prolongeant le corps **16** de tuyère à l'extrémité inférieure de celui-ci et définissant intérieurement un alésage **35** dont le diamètre est égal au diamètre de l'alésage **34**, de sorte qu'aucune discontinuité de diamètre n'apparaît à la jonction entre le corps **16** de tuyère et l'embout **17**.

Le dispositif **14** d'injection comprend en outre un insert **36** monté mobile en translation, de manière coaxiale, par rapport à la tuyère **15**. Cet insert **36** comprend un corps **37** tubulaire dont le diamètre externe est inférieur au diamètre interne du trou central du joint **18**, de sorte à permettre un coulissement de l'insert **36** sans frottement à l'extrémité inférieure de la tuyère **15**, en particulier au niveau du joint **18**. L'insert **36** est creux pour permettre le passage de la tige d'élongation ; son diamètre intérieur est suffisamment important pour ménager, autour de la tige d'élongation, un passage pour le gaz sous pression injecté dans la préforme **2** via la tuyère **15**.

L'insert **36** est muni de moyens de guidage sous forme d'au moins une collerette, et de préférence, comme cela est représenté sur les figures, de deux collerettes annulaires en saillie sur la surface externe du corps **37**, à savoir une collerette **38** supérieure située à une distance prédéterminée, relativement faible par rapport à la hauteur totale du corps **37**, d'une extrémité **39** supérieure de l'insert **36**, et une collerette **40** inférieure écartée de la collerette **38** supérieure et située environ à mi-hauteur du corps **37**.

Les collerettes **38**, **40** présentent toutes deux un diamètre externe égal, au jeu près, au diamètre des alésages **34**, **35**, permettant ainsi un guidage axial précis de l'insert **36** par rapport à la tuyère **15**.

Comme cela est bien visible sur la figure 2, la collerette **40** inférieure présente une face **41** d'appui inférieure tronconique, apte, dans une position basse de l'insert **36** illustrée sur la figure 1, à venir en butée contre un siège **42** tronconique complémentaire formé dans l'embout **17** au voisinage d'une extrémité inférieure de celui-ci, limitant ainsi la course verticale de l'insert **36**.

Entre la collerette **38** supérieure et l'extrémité **39** supérieure du corps **37**, celui-ci présente une section **43** d'extrémité supérieure sur laquelle est enfilé un ressort **44** de rappel, par ailleurs emmanché dans une section d'extrémité inférieure de la chemise **27** délimitée par le circlips **30**. Le ressort **44**, qui fonctionne en compression, est interposé en étant comprimé entre la collerette supérieure **38** et le circlips **30** dont une face inférieure forme une surface d'appui pour le ressort **44**. Le ressort **44** sollicite en permanence l'insert **36** vers sa position basse.

Le corps **37** de l'insert **36** présente une extrémité **45** inférieure formant une face d'appui apte à venir en contact avec le buvant **4** de la préforme **2**, comme cela est illustré sur la figure 3, pour stabiliser celle-ci lors de la descente de la tuyère **15** vers sa position basse. Selon un mode de réalisation illustré sur les figures, la face **45** d'appui est plane et s'étend dans un plan perpendiculaire à l'axe **A**.

Comme cela est bien visible sur la figure 4, la face **45** d'appui présente un diamètre médian sensiblement égal au diamètre médian du buvant **4** tout en ayant une extension radiale supérieure à celle du buvant **4** (en d'autres termes, l'épaisseur du corps **37** au niveau de la face **45** d'appui est supérieure à celle du col **3** au niveau du buvant **4**), de sorte qu'un léger débattement radial de la préforme **2** dans l'ouverture **12** est permis sans risque de perte de contact entre la face **45** d'appui et le buvant **4.**

Comme cela est illustré sur la figure 1, en position haute de la tuyère **15** et en l'absence de toute sollicitation extérieure du l'insert (autre que la force de rappel du ressort **44**), la face **45** d'appui dépasse de la tuyère **15**. Plus précisément, dans cette position, où la face **41** d'appui inférieure de la collerette **40** inférieure se trouve en butée contre le siège **42**, une portion **46** substantielle du corps **37** (c'est-à-dire d'une longueur supérieure à 1/5^{e} environ de la longueur totale de celui-ci) dépasse de la tuyère en direction du moule **9**, en saillie à partir d'une face **47** d'appui du joint **18**. En l'occurrence, le corps **37** dépasse de la tuyère **15** de plus du tiers de sa hauteur.

Compte tenu de son encombrement radial dans sa partie inférieure, il n'est pas possible de rapprocher la tuyère **15**, dans sa position haute, de la face **11** supérieure du moule au-delà d'une distance minimale de sécurité, sans qu'il soit nécessaire de repenser la forme ou l'agencement des organes environnants (notamment les organes de préhension de la préforme **2** et du récipient final).

L'insert **36**, en revanche, dont le corps **37** présente un diamètre extérieur sensiblement égal ou à peine supérieur à celui de la préforme **2**, peut être positionné au plus près de celle-ci. Il est ainsi possible de minimiser la distance séparant la face **45** d'appui du buvant **4**, sans modifier la distance séparant la tuyère **15** du moule **9** en position haute de la tuyère **15** - c'est-à-dire, plus précisément, la distance entre la face **47** d'appui du joint **18** et la face supérieure **11** du moule **9.**

On voit ainsi, sur la figure 1, que la portion **46** du corps **37** comble quasiment l'espace séparant la tuyère **15** de la préforme **2**, un jeu **J** étant toutefois ménagé entre la face **45** d'appui et le buvant **4**. Ce jeu **J**, de quelques millimètres à peine, permet le passage de la préforme **2** lors de son introduction transversale dans le moule **9** ouvert (la préforme **2** étant alors légèrement surélevée par rapport à sa position finale dans le moule **9**, afin d'éviter les chocs de la collerette **5** sur la face **11** supérieure du moule **9**), tout en empêchant le basculement de la préforme **2** lors du retrait de l'organe de préhension au moment de la dépose dans le moule **9**. Le débattement angulaire de la préforme **2** est en effet contrarié par la butée du buvant **4** contre la face **45** d'appui de l'insert **36**, qui tend ainsi à ramener la préforme **2** en position verticale dans l'axe **A** du moule **9**.

En outre, alors que dans la demande FR 2 912 678 l'insert est complètement associé à la tuyère, son ressort de rappel prenant appui contre une rondelle rigidement fixée à la tuyère de sorte que l'insert accompagne la tuyère dans tous ses mouvements de translation verticale, l'insert **36** est ici partiellement dissocié de la tuyère **15**, son ressort **44** de rappel prenant appui contre le circlips **30**, lequel est monté dans la chemise **27** qui reste fixe lors des mouvements de translation de la tuyère **15**. Il est par conséquent possible d'obtenir une force d'appui prédéterminée, fixe, de l'insert **36** sur la préforme **2**, dépendant du choix initial du ressort **44** mais indépendante de la position de la tuyère **15**.

Comme cela est représenté sur les figures, le diamètre extérieur du corps **37** de l'insert **36** est inférieur au diamètre intérieur de la chemise **27**, de sorte qu'un passage annulaire est ménagé entre eux pour le gaz sous pression injecté lors du soufflage de la préforme **2**. Des perçages **48**, **49** axiaux formant des évents sont par ailleurs ménagés tant dans la collerette **38** supérieure que dans la collerette **40** inférieure, pour autoriser le passage du gaz dans l'espace annulaire entre le corps **37** et la tuyère **15** et permettre ainsi l'égalisation des pressions à l'intérieur et à l'extérieur de l'insert **15** pour éviter toute déformation de celui-ci. En position basse de la tuyère **15**, le joint **18** assure l'étanchéité du raccord avec le moule **9**, limitant ainsi les fuites de gaz.

Il résulte de la description qui précède que, par sa conception, l'insert **36** peut équiper une tuyère **15** existante avec un minimum de modifications structurelles à apporter à celle-ci. L'embout **17** est pratiquement la seule pièce concernée, avec la nécessité d'y former le siège **42** tronconique à une hauteur telle qu'à l'approche de sa position haute la tuyère **15** puisse embarquer l'insert **36** dans sa remontée, la face **41** d'appui de la collerette **40** inférieure venant buter contre le siège **42**.

Le fonctionnement du dispositif **14** d'injection est le suivant, à partir de la position haute de la tuyère **15**.

Dans cette position, la chambre inférieure **33** est sous pression, le piston **31** étant en butée contre la tête **29** de la chemise **27** ; la tuyère **15** est écartée du moule **9** ; la collerette inférieure **40** est en butée de fin de course contre le siège **42**, la tuyère **15** assurant ainsi le blocage en translation de l'insert **36** en position basse et sa suspension à une distance du moule **9** suffisante pour permettre l'introduction de la préforme **2** sans gêner le passage transversal du col **3**.

Le moule **9** est ouvert ; la préforme **2** y est introduite transversalement au moyen d'un organe de préhension tel qu'une pince. La préforme **2** est relâchée lors de la fermeture du moule **9**. Son mauvais positionnement axial éventuel, résultant par exemple d'un choc élastique avec rebond de la collerette **5** contre le lamage **13**, est contrarié par la présence voisine de l'insert **36** dont la face **45** d'appui est à faible distance **J** du buvant **4**.

Dès le lâcher de la préforme **2**, la tuyère **15** est déplacée vers sa position basse par mise sous pression de la chambre **32** supérieure et dégazage simultané de la chambre **33** inférieure, ce qui assure le déplacement vertical du piston **31**.

Compte tenu du caractère faible, voire négligeable, du jeu **J** au regard de la course de la tuyère **15**, l'insert **36** vient au contact du buvant **4** dès le début de la descente de la tuyère **15**.

Dans l'hypothèse où la préforme **2** rebondit sur le moule **9** lors du lâcher, elle vient heurter par son buvant **4** la face **45** d'appui de l'insert **36**. Une partie de l'énergie du choc est absorbée par la compression du ressort **44** et le recul simultané de l'insert **36**, lequel agit ainsi à la manière d'un amortisseur vis-à-vis de la préforme **2**. La détente du ressort **44**, qui intervient une fraction de seconde après le choc, plaque la préforme **2** contre la face **11** supérieure du moule **9** avec la collerette **5** calée dans le lamage **13**, tandis que la tuyère **14** poursuit sa descente.

Dès lors que le siège **42** s'écarte de la collerette **40** inférieure, la force d'appui de l'insert **15** sur la préforme **2** reste constante, égale à la force de rappel exercée par le ressort **44** sur l'insert **36**, et ce indépendamment de la position de la tuyère **15**. La préforme **2** se trouve ainsi plaquée contre la face **11** supérieure du moule **9**, et plus précisément contre le lamage **13**, ce qui maintient la préforme **2** dans l'axe **A** vertical du moule **9**.

En position basse (figure 3), le joint **18** est au contact de la collerette **5**, assurant l'étanchéité du volume interne, sous pression, de la tuyère **15**.

Le dispositif **14** d'injection qui vient d'être décrit permet de diminuer encore la proportion de préformes présentant un mauvais positionnement lors de leur introduction dans le moule. Il en résulte une réduction supplémentaire du taux de rebut et une amélioration de la qualité moyenne des récipients soufflés, en particulier des récipients de faible capacité.

## Revendications

1. Dispositif (**14**) d'injection de gaz sous pression pour une machine (**1**) de soufflage ou d'étirage soufflage d'un récipient à partir d'une ébauche (**2**) en matière plastique, ce dispositif comprenant :
- une tuyère (**15**) mobile en translation entre une position haute dans laquelle elle est écartée d'un moule (**9**) destiné à recevoir l'ébauche (**2**), et une position basse dans laquelle elle vient en appui contre le moule (**9**) en recouvrant un col (**3**) de l'ébauche (**2**),
- un insert (**36**) monté mobile en translation par rapport à la tuyère (**15**), cet insert (**36**) présentant une face (**45**) d'extrémité inférieure apte à venir en appui contre un buvant (**4**) de l'ébauche (**2**) ;
- un organe (**44**) de rappel sollicitant l'insert (**36**) vers une position basse dans laquelle l'insert (**36**) se trouve en butée de fin de course par rapport à la tuyère (**15**),
ce dispositif étant **caractérisé en ce que**, en position basse de l'insert (**36**), sa face (**45**) d'extrémité inférieure dépasse de la tuyère (**15**).

2. Dispositif (**14**) selon la revendication 1, **caractérisé en ce que** ladite face (**45**) d'appui est plane.

3. Dispositif (**14**) selon la revendication 2, **caractérisé en ce que** ladite face (**45**) d'appui est perpendiculaire à un axe (**A**) de déplacement de l'insert (**36**).

4. Dispositif (**14**) selon l'une des revendications 1 à 3, **caractérisé en ce que** l'épaisseur de l'insert (**36**) au niveau la face (**45**) d'extrémité inférieure est supérieure à celle du col (**3**) de l'ébauche (**2**) au niveau du buvant (**4**).

5. Dispositif (**14**) selon l'une des revendications 1 à 4, **caractérisé en ce que** l'insert (**36**) comprend un corps (**37**) tubulaire à partir duquel s'étend, en saillie radiale, au moins une collerette (**38, 40**) coopérant à coulissement avec un alésage (**34, 35**) formé dans la tuyère (**15**).

6. Dispositif (**14**) selon la revendication 5, **caractérisé en ce que** ladite collerette (**38, 40**) est percée de trous (**48, 49**) formant évents.

7. Dispositif (**14**) selon l'une des revendications 1 à 6, **caractérisé en ce que** la tuyère (**15**) est montée en translation par rapport à un cylindre (**22**) fixe.

8. Dispositif (**14**) selon la revendication 7, **caractérisé en ce que** l'organe (**44**) de rappel est interposé entre l'insert (**36**) et une surface d'appui fixe par rapport au cylindre (**22**).

9. Dispositif (**14**) selon la revendication 8, **caractérisé en ce que** ladite surface d'appui appartient à une bague (**30**) d'arrêt montée sur une chemise (**27**) fixe par rapport au cylindre (**22**) et dont un corps (**28**) est emmanché dans la tuyère (**15**).

10. Machine (**1**) de fabrication de récipients par soufflage ou étirage soufflage à partir d'ébauches (**2**) en matière plastique, qui comprend :
- au moins une unité (**8**) de moulage munie d'un moule (**9**) destiné à recevoir une ébauche (**2**), et
- une tuyère (**15**) selon l'une des revendications 1 à 9, montée mobile entre une position haute où elle est écartée d'une face (**11**) supérieure du moule (**9**) pour permettre l'introduction de l'ébauche (**2**) dans le moule (**9**), et une position basse dans laquelle elle est appliquée contre la face (**11**) supérieure du moule (**9**).

## Patentansprüche

1. Einspritzvorrichtung (14) für Gas unter Druck für eine Blas- oder Zieh-Blas-Maschine (1) eines Behälters aus einem Rohling (2) aus Kunststoff, wobei diese Vorrichtung umfasst:
- eine Rohrleitung (15), die in Translation zwischen einer oberen Position, in der sie von einer Form (9), die dazu bestimmt ist, den Rohling (2) aufzunehmen, entfernt ist, und einer unteren Position, in der sie an der Form (9) zur Anlage gelangt, wobei sie einen Hals (3) des Rohlings (2) abdeckt, beweglich ist;
- einen Einsatz (36), der in Translation in Bezug zu der Rohrleitung (15) beweglich ist, wobei dieser Einsatz (36) eine untere Endfläche (45) aufweist, die geeignet ist, an einem Angriffsrand (4) des Rohlings (2) zur Anlage zu gelangen;
- ein Rückstellelement (44), das den Einsatz (36) in eine untere Position bringt, in der sich der Einsatz (36) am Anschlag in Bezug zur Rohrleitung (15) befindet,
wobei diese Vorrichtung **dadurch gekennzeichnet ist, dass** in der unteren Position des Einsatzes (36) dessen untere Endfläche (45) über die Rohrleitung (15) hinausragt.

2. Vorrichtung (14) nach Anspruch 1, **dadurch gekennzeichnet, dass** die Stützfläche (45) flach ist.

3. Vorrichtung (14) nach Anspruch 2, **dadurch gekennzeichnet, dass** die Stützfläche (45) auf eine Verschiebeachse (A) des Einsatzes (36) senkrecht steht.

4. Vorrichtung (14) nach einem der Ansprüche 1 bis 3, **dadurch gekennzeichnet, dass** die Dicke des Einsatzes (36) im Bereich der unteren Endfläche (45) größer als jene des Halses (3) des Rohlings (2) im Bereich des Angriffsrandes (4) ist.

5. Vorrichtung (14) nach einem der Ansprüche 1 bis 4, **dadurch gekennzeichnet, dass** der Einsatz (36) einen röhrenförmigen Körper (37) umfasst, von dem sich radial vorspringend mindestens ein Kragen (38, 40) erstreckt, der durch Gleiten mit einer Bohrung (34, 35) zusammenwirkt, die in der Rohrleitung (15) ausgebildet ist.

6. Vorrichtung (14) nach Anspruch 5, **dadurch gekennzeichnet, dass** der Kragen (38, 40) mit Löchern (48, 49) durchbohrt ist, die Abzüge bilden.

7. Vorrichtung (14) nach einem der Ansprüche 1 bis 6, **dadurch gekennzeichnet, dass** die Rohrleitung (15) in Translation in Bezug zu einem festen Zylinder (22) montiert ist.

8. Vorrichtung (14) nach Anspruch 7, **dadurch gekennzeichnet, dass** das Rückstellelement (44) zwischen dem Einsatz (36) und einer festen Stützfläche in Bezug zum Zylinder (22) angeordnet ist.

9. Vorrichtung (14) nach Anspruch 8, **dadurch gekennzeichnet, dass** die Stützfläche einem Haltering (30) angehört, der auf einem festen Mantel (27) in Bezug zum Zylinder (22) montiert ist, und ein Körper desselben (28) in die Rohrleitung (15) gesteckt ist.

10. Maschine (1) zur Herstellung von Behältern durch Blasen oder Blasen-Ziehen aus einem Rohling (2) aus Kunststoff, umfassend:
- mindestens eine Formgusseinheit (8), die mit einer Form (9) versehen ist, die dazu bestimmt ist, einen Rohling (2) aufzunehmen, und
- eine Rohrleitung (15) nach einem der Ansprüche 1 bis 9, die zwischen einer oberen Position, in der sie von einer Oberseite (11) der Form (9) entfernt ist, um die Einführung des Rohlings (2) in die Form (9) zu ermöglichen, und einer unteren Position, in der sie an die Oberseite (11) der Form (9) angelegt ist, beweglich montiert ist.

## Claims

1. Pressurized-gas injection device (14) for a machine (1) for blow moulding or stretch blow moulding a container from a parison (2) made of plastic, this device comprising:
- a nozzle (15) movable in translation between an upper position in which it is separated from a mould (9) intended to receive the parison (2), and a lower position in which it bears against the mould (9) while covering a neck (3) of the parison (2),
- an insert (36) mounted movably in translation with respect to the nozzle (15), this insert (36) having a lower end face (45) able to bear against a mouth (4) of the parison (2);
- a return member (44) urging the insert (36) towards a lower position in which the insert (36) is in end-of-travel abutment with respect to the nozzle (15),
this device being **characterized in that**, in the lower position of the insert (36), its lower end face (45) extends beyond the nozzle (15).

2. Device (14) according to Claim 1, **characterized in that** the said bearing face (45) is flat.

3. Device (14) according to Claim 2, **characterized in that** the said bearing face (45) is perpendicular to an axis (A) of movement of the insert (36).

4. Device (14) according to one of Claims 1 to 3, **characterized in that** the thickness of the insert (36) at the lower end face (45) is greater than that of the neck (3) of the parison (2) at the mouth (4).

5. Device (14) according to one of Claims 1 to 4, **characterized in that** the insert (36) comprises a tubular body (37) from which there extends, projecting radially, at least one collar (38, 40) slidably cooperating with a bore (34, 35) formed in the nozzle (15).

6. Device (14) according to Claim 5, **characterized in that** the said collar (38, 40) is pierced with holes (48, 49) which form vents.

7. Device (14) according to one of Claims 1 to 6, **characterized in that** the nozzle (15) is mounted in translation with respect to a fixed cylinder (22).

8. Device (14) according to Claim 7, **characterized in that** the return member (44) is interposed between the insert (36) and a bearing surface which is fixed with respect to the cylinder (22).

9. Device (14) according to Claim 8, **characterized in that** the said bearing surface belongs to a stop ring (30) mounted on a sleeve (27) which is fixed with respect to the cylinder (22) and of which a body (28) is fitted into the nozzle (15).

10. Machine (1) for manufacturing containers by blow moulding or stretch blow moulding from parisons (2) made of plastic, which comprises:
- at least one moulding unit (8) equipped with a mould (9) intended to receive a parison (2), and
- a nozzle (15) according to one of Claims 1 to 9, mounted movably between an upper position in which it is separated from an upper face (11) of the mould (9) in order to allow the introduction of the parison (2) into the mould (9), and a lower position in which it is pressed against the upper face (11) of the mould (9).
